# EUROPEAN PATENT SPECIFICATION

(11) **EP 4 209 375 B1**
(45) Date of publication and mention of the grant of the patent: **18.02.2026**
(21) Application number: 22207845.3
(22) Date of filing: 16.11.2022
(51) Int. Cl.: B60K 15/05, E05F 15/616

(54) **ELECTRICAL CHARGING FLAP**
ELEKTRISCHE LADEKLAPPE
VOLET DE CHARGE ÉLECTRIQUE

(30) Priority: 18.11.2021 US 202163280895 P; 31.03.2022 US 202217710089
(43) Date of publication of application: 12.07.2023
(73) Proprietor: Motherson Innovations Company Ltd., London EC2N 2AX (GB)
(72) Inventor: SCOTT-COLLINS, Callum, Portchester, Hampshire PO 16 9SD (GB); HORNE, Steve, Portchester, Hampshire PO 16 9SD (GB); LETTIS, Andrew, Portchester, Hampshire PO 16 9SD (GB); MALICKI, Oscar, Portchester, Hampshire PO 16 9SD (GB); CONNOR, Kane, Portchester, Hampshire PO 16 9SD (GB); McKAY, Matthew, Portchester, Hampshire PO 16 9SD (GB)
(74) Representative: Weber-Bruls, Dorothée

(56) References cited:
- EP-A1- 3 078 531
- WO-A1-2018/081201
- DE-A1- 102009 060 119
- US-A1- 2015 274 010
- US-B2- 7 758 098

## Description

### FIELD OF THE INVENTION

The following description relates to a charge flap arrangement comprising an engagement feature, a sealing unit for said charge flap arrangement, a hinge arm assembly for said charge flap arrangement, a charge flap housing with said sealing unit, a vehicle with charge flap arrangement, said sealing unit as well as said charge flap housing and a method for assembling said hinge arm assembly. In detail, the present invention refers to a hinge arm assembly for a charge flap arrangement of a motor vehicle according to the preamble of claim 1 and a motor vehicle with such a charge flap arrangement as well as a method for assembling such a hinge arm assembly.

### BACKGROUND OF THE INVENTION

Tank or charging modules for vehicles are used to close a tank filler pipe or a charging plug or other connections for refueling or repowering in a first position of a flap and to release it in a second, open position of the flap. For this purpose, the tank or loading flaps of the modules close flush with the surface of the vehicle body in the closed position and also seal the tank or loading trough against the environment via corresponding seals on the flap or on the trough body. With this arrangement it should be ascertained that no debris, such as water, dirt, ice and the like finds its way into the tank or loading trough. The trough body itself is fixed to the vehicle and has an opening through which the insertion tube or the charging plug is guided.

The (charge or tank) flap should securely rest in place in a first position when no tanking or charging operation is undertaken and should easily be opened using a simple opening mechanism. Furthermore, the charge flap should also rest in a second position during refueling or repowering situation, wherein the second position should not interfere with the refuel or repowering action. Several problems arise in connection with such tank or charging modules. First, to ensure that the flap can be opened, a certain amount of pressure is needed in order to actuate a locking or unlocking mechanism. This amount of pressure can damage the opening mechanism, such as digital pressure sensors. Second, several sealings are necessary at different locations of the tank or charging modules to ensure that the inner part of the tank or charging modules, i.e. the housing thereof, is protected from different environmental influences such as water, snow, wind and/or dirt. This makes the overall design and preparation process of the tank difficult. Third, nowadays the tank or charge flap may be opened and closed by use of a motor. The current design for such a motor driven flap is characterized by the use of several different parts to link together the different necessary components, such as the motor (actuator), a drift shaft, a hinge arm, one or more sealings and a housing which fixes these components in place and which ensures a trouble-free functioning of the system. The amount of components implies a high complexity of the assembling process and furthermore it implies many weak points detrimental to the frequent use of such a charge flap arrangement.

WO 2018/081201 A1 refers to a tank flap or charging flap arrangement for a vehicle, comprising a housing which can be inserted into a mounting opening in the vehicle and has at least one connection part for the refueling or electrical charging of the vehicle, furthermore comprising a flap which is arranged on a hinge arm of the tank flap or charging flap arrangement, the hinge arm being mounted on the housing so as to be pivotable about a first pivot axis, wherein the flap is mounted on the hinge arm so as to be pivotable about a second pivot axis, and therefore the flap can be pivoted between a closed position, in which the flap closes the housing, and a first opening position, in which the flap opens up access to the at least one connection part for the refueling or electrical charging of the vehicle, and a second opening position, which is opened further than the first opening position.

DE 10 2009 060 119 A1 teaches an actuating device for opening and closing a cover in or on an automobile, with a push-push kinematics that interacts with the cover, the push-push kinematics.

EP 3 078 531 A1 describes a lid device for pushing out a hinged lid from a closed position to an open ready position, and for releasably locking the lid in the closed position, comprising: a push lifter that alternates between an extended state for pushing the lid to the open ready position and a retracted state for permitting the lid to be placed in the closed position each time a free end of the push lifter is pushed by the lid; a drive unit positioned near the push lifter; a lock member moveable between an engage position for engaging the lid in the closed position and a release position for releasing the lid; and a transmission mechanism for transmitting a drive force of the drive unit to the lock member to move the lock member between the engage position and the release position; wherein the push lifter and the drive unit are arranged such that a lengthwise direction of the push lifter and a lengthwise direction of the drive unit are perpendicular to each other, and such that the drive unit at least partly overlaps with the push lifter when seen from the lengthwise direction of the drive unit.

US 2015/274010 A1 refers to a charging housing or filler neck housing for insertion into a body opening in a motor vehicle, comprising: a housing body with a passage opening into which a plug-in charging connector or a tank filler pipe can be inserted; a sealing ring arranged on the passage opening, wherein the sealing ring has an annular sealing body from which a first elastic sealing lip and a second elastic sealing lip extend, wherein the first sealing lip is designed to bear against a plug-in charging connector or tank filler pipe inserted into the passage opening, and wherein the second sealing lip is designed to bear against a closure flap closing the filler neck housing or charging housing.

US 7,758,098 B2 teaches a device for making accessible and closing a filler neck compartment of a vehicle body through a closing part of a first moving device for moving the closing part in a first moving direction perpendicular to the vehicle body, and a second moving device for moving the closing part in a second moving direction parallel to the vehicle body and perpendicular to the first moving direction, wherein each of said first and second moving devices include electromechanical devices consisting of a lift magnet and an electric motor and the closing part is connected with a longitudinally moveable sleeve in a rigid and offset manner.

### SUMMARY

The object of the present invention is to further develop the known hinge arm assembly for a charge flap arrangement of a motor vehicle to overcome the problems of the prior art.

This object is achieved by the characterizing features of claim 1. Preferred embodiments of the charge flap arrangement are described in claims 2 to 4.

The present invention also provides a motor vehicle comprising an the hinge arm assembly as well as a method for assembling such a hinge arm assembly in line with claim 6. Claims 7 to 9 describe preferred embodiments of the method according to the present invention.

A charge flap arrangement may comprise an engagement feature for controlling an opening mechanism for the charge flap. In embodiments, a sealing unit is provided that is adapted to be installed on a charge flap housing of a motor vehicle for simultaneously fulfilling several functions within the charge flap housing. In embodiments, a structurally simplified hinge arm assembly is provided for opening and closing the charge flap and a method is provided for a reduced complexity by assembling said hinge arm assembly.

A charge flap arrangement of a motor vehicle may also comprise a frame including an aperture and a housing having an interior, a 2K charge flap to close the aperture and having an engaging feature absorbing compressive forces, a charging socket within the interior of the housing and a flap releasing button located on the charging socket and opposite the engaging feature, wherein the flap releasing button is adapted to control a locking arrangement of the charge flap, wherein the engaging feature has a shape and is made from a material that is capable of absorbing forces in the range of 5 to 100 N in order to protect the flap releasing button from over pressurizing and, wherein the engagement feature is adapted to actuate the flap releasing button.

According to one embodiment, the engaging feature may have any form and may be made from any material that is suitable to provide the necessary overpressure stability and/or force absorption capability. For example, the engaging feature may have a zig-zag shape, wave shape, folded shape, honeycomb shape, or combinations thereof, but is not limited thereto. The engaging feature may be of a rubber material or plastic material, but is not limited thereto. The force may be adapted according to any specific requirements, for example may be in the range of 5.5 to 52 N. The locking of the charge flap may be achieved by any suitable locking tool, such as by a mechanical arrangement, by a magnetic arrangement and/or by an electrical arrangement.

A sealing unit may be adapted for sealing a charge flap housing of a motor vehicle, wherein the sealing unit is provided in form of a 2K component comprising a charge flap housing and at least three sealing zones that provide simultaneous sealing to one or more parts of the charge flap housing, wherein the at least three sealing zones each comprise at least one sealing lip. Different sealing lips may be provided in this aspect to provide different degrees of protection according to, for example, ISO 20653 and/or DIN EN 60529.

In embodiments, the sealing unit provides sealing to different parts of the charge flap housing. Generally, sealing may be provided to any part which needs to be sealed from any environmental influence. For example, sealing may be provided to one or more of a charge socket, to one or more body panels, a charge flap, a locking mechanism and/or a base. The sealing unit may provide sealing to one or more of the aforementioned parts, preferably two or more of the aforementioned parts. However, sealing to other parts of the charge flap housing may also be provided. For example, the sealing may be simultaneously provided to the charge socket, to one or more body panels, the charge flap, the locking mechanism and the base. Furthermore, the different sealing lips may be independently formed from different materials that provide sealing capability. Sealing capability, as used herein, means that the sealing is air-tight, water-tight, and/or dust-tight. In one embodiment, the sealing material is compressible. Suitable materials may be rubber or plastic materials.

In an embodiment, the present invention provides a hinge arm assembly for a charge flap arrangement of a motor vehicle, wherein the hinge arm assembly comprises a housing cap having at least one flexible hinge arm support; a charge flap housing coupled partially with the flexible hinge arm support; a hinge arm with a built-in drive shaft clipped into the housing cap and hold in place with clamping force; an actuator coupled to the built-in drive shaft; and at least one sealing component arranged between the actuator and the housing cap. This configuration in particular reduces the amount of components of recent hinge arm assemblies, wherein a direct contact with the driving actuator is provided. Still further, this configuration allows a less complex and time consuming assembly.

According to other embodiments, the housing cap may be made from a polymeric material, wherein in another aspect the polymeric material may be a self-lubricating material. Further, the hinge arm material may be selected from polymeric materials, glass-filled polymeric materials, metal materials and metal-alloy materials. In addition, the hinge arm assembly may further comprise a locking mechanism controlled by an electric actuator comprising at least one micro-switch. In another aspect, the locking mechanism may comprise a hook.

In another embodiment, the present disclosure provides a method for assembling a hinge arm assembly for a charge flap arrangement of a motor vehicle, comprising the steps providing a housing cap having at least one flexible hinge arm support; rotating and/or pushing and/or clipping a hinge arm with built-in drive shaft into the housing cap, wherein the at least one flexible hinge arm support provides an assembly space by being molded out of position; and pushing the at least one flexible hinge arm support into final assembled condition, by coupling a part of the charge flap housing to the at least one flexible hinge arm support. According to another embodiment, the method still further comprises the steps of attaching an actuator by pushing the same over the drive shaft; wherein at least one sealing unit is arranged between the actuator and the housing cap.

In another embodiment, pushing the at least one flexible hinge arm support into final assembled condition may be achieved by engaging a part of the charge flap housing into a pocket or recess of the hinge arm assembly, wherein the part of the charge flap housing and the pocket or recess form an interference fit. Furthermore, the housing cap may be made from a polymeric material. Still further, the polymeric material is a self-lubricating material.

The term "2K," as used herein, refer to a component comprising at least two different materials.

### BRIEF DESCRIPTION OF DRAWINGS

Embodiments of the present disclosure will be discussed with reference to the accompanying drawings wherein:
- Figure 1: is a schematic view of an engaging feature of a charge flap.
- Figure 2: is a schematic view illustrating a cross section taken along line A-A of the engaging feature of the charge flap of Fig. 1.
- Figure 3: is a schematic view illustrating a cross section taken along line C-C of the charge flap arrangement shown on the left side, illustrating a cross section of an embodiment of a sealing unit charge flap.
- Figure 4a and 4b: are schematic views illustrating assembling of a 2K charge flap housing.
- Figure 5: is a schematic view illustrating a cross section of a sealing unit taken along line D-D of the charge flap arrangement shown on the left side.
- Figure 6: is a schematic view illustrating a cross section of the charge flap hinge arm and the housing cap in a non-final assembly condition.
- Figure 7: is a schematic view illustrating a cross section of the charge flap hinge arm and the housing cap in a final assembly condition.

In the following description, like reference characters designate like or corresponding parts throughout the figures.

### DETAILED DESCRIPTION

Dimensional attributes used herein, such as upwards, upper, downwards, lower, inwards, inner, outwards, outer and the like are to be understood in the context of a motor vehicle, in particular a four-wheeled motor vehicle, and its main direction of travel. Furthermore, the ground supporting the motor vehicle is to be considered.

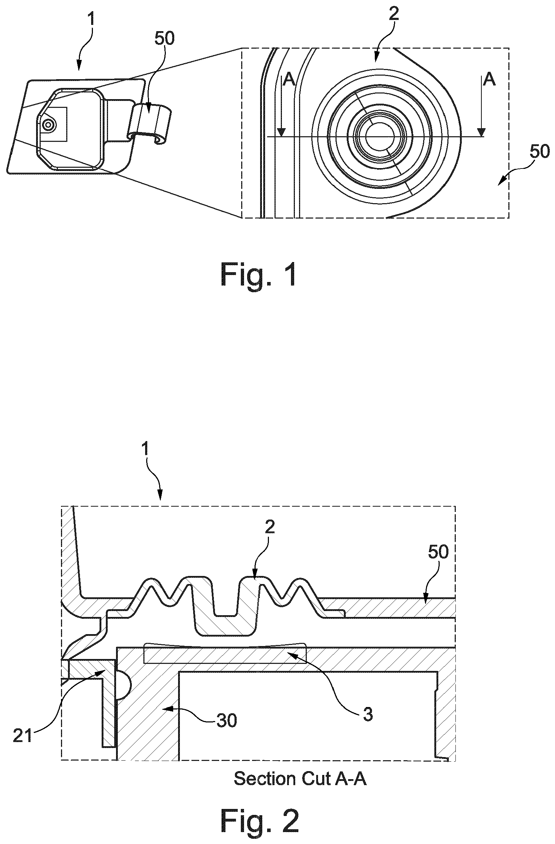

Referring now more specifically to Fig. 1 an enlarged view of an engaging feature 2 mounted in a charge flap arrangement 1, for example on a charge flap hinge arm 50 or on the inside of a charge flap cover 51, is shown. According to this embodiment, the engaging feature 2 is located on the left side of the charge flap arrangement 1 opposite to the emerging hinge arm 50. Pressing the engaging feature 2 leads to an unlocking of a charge flap housing 21, wherein the engaging feature 2 prevents a flap releasing button 3 from over pressurizing. The force applied to the engaging feature 2 is distributed equally due to the specific form of the engaging feature and/or the material thereof. The engaging feature 2 may be made from a rubber material that provides the necessary stability and force distribution. The engaging feature 2 in this embodiment has a wave form, but may have any other form suitable to provide the necessary overpressure stability. Forces in the range of 5 to 100 N, 5 to 75 N, 5.5. to 52 N or the like can be absorbed.

The mechanism is shown in detail in Fig. 2. According to the embodiment of Fig. 2 the flap releasing button 3 is located on the charging socket 30 opposite to the engaging feature 2. In this embodiment the flap releasing button 3 is a pressure sensor sensing the pressure that is provided by the engaging feature 2 when pressed by a user. A locking in this embodiment (not shown) may be achieved by any means known in the art, such as a mechanical locking mechanism, a magnetic locking mechanism, an electrical locking mechanism, any combination thereof, or the like.

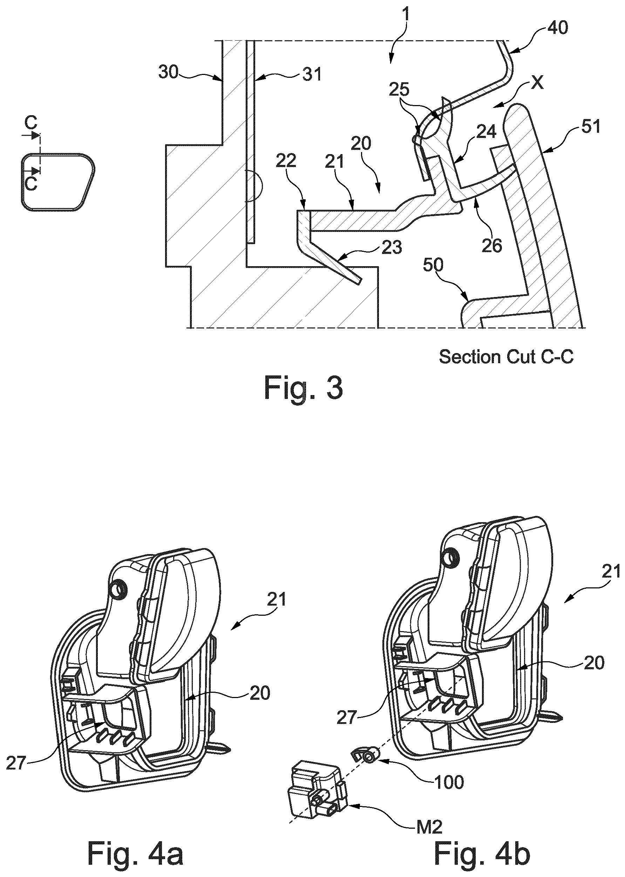

Referring to Fig. 3, an exemplary embodiment of the inventive sealing unit 20 is depicted. In this embodiment, a cross section along the line C-C of the charge flap arrangement 1 for a motor vehicle comprising the sealing unit 20 is shown. In this embodiment, a charge flap housing 21 comprises the charge flap cover 51 which is the outmost part that can be seen when the charge flap arrangement 1 is closed, so that protection of the interior parts of the charge flap housing 21 is provided. The charge flap arrangement 1 comprises a charging socket 30, a body panel 40, the charge flap hinge arm 50, the charge flap cover 51 and an inner panel 31. The sealing unit 20 is formed as an 2K component arranged on the 2K charge flap housing 21 having an inner sealing portion 22 with one sealing lip 23 sealing to the charging socket 30, an outer sealing portion 24 with two sealing lips 25 sealing to the body panel 40 and one sealing lip 26 sealing to the 2K charge flap hinge arm 50. With this arrangement several sealing zones are created which may provide similar or different sealing qualities or sealing properties. For example, these sealing lips may provide a different degree of protection according to ISO 20653 and/or DIN EN 60529, such as protection against hazardous parts and the ingress of solid foreign objects (such as dust and the like) and/or protection against spraying water, splashing of water, water jets, immersion in water and the like. The level of protection can be managed by specifically selecting form and amount of the sealing lips and/or the material for each sealing lip. For example, the sealing lips may independently be formed from rubber or plastic material.

In other words, the sealing unit 20 is adapted to provide simultaneous sealing to the charging socket 30, for example of the IP5k4k type, via the one sealing lip 23, the body panel 40, for example of the IP6k9k type, via the two sealing lips 25 and the charge flap hinge arm 50, for example of the IP5k4k type, via the one sealing lip 26. The amount of sealing lips as well as the sealing device in form of the sealing lips can be varied according to the general knowledge of one skilled in the art. Furthermore, it is well known from those skilled in the art, that the sealing lips can be folded when pressing the charge flap inward and/or the lips can compensate the movement of the pressed charge flap.

For example, according to the embodiment of Fig. 3 a water flow channel and wind noise area X is provided by the outer sealing component 24, the body panel 40, the charge flap hinge arm 50 and the charge flap cover 51. According to other embodiments, the charge flap cover 51 and the 2K charge flap hinge arm 50 are the same component.

According to the specific embodiment of Fig. 3 the 2K charge flap housing 21 is substantially L-shaped and comprises an inner end supporting the inner sealing portion 22 and an outer end supporting the outer sealing portion 24, wherein the 2K charge flap housing 21 is adapted to emerge in an outwards direction substantially parallel to a ground (not shown) from its inner end, to bend in an upwards direction, to then continue in an outwards direction substantially parallel to the ground and to bend in an upwards direction substantially orthogonal to the ground to form the outer end of the central ceiling portion of the flap housing 21. The inner sealing portion 22 is formed at the inner end of the central ceiling portion of the flap housing 21, wherein the inner sealing portion 22 is adapted to emerge in a substantially downwards direction and to form the sealing lip 23 by bending in an outwards direction. The outer sealing portion 24 comprises an upper end and a lower end and is formed at and substantially parallel to the outer end of the 2K charge flap housing 21, wherein the lower end of the outer sealing portion 24 is adapted to emerge in a substantially outwards direction to form the sealing lip 26, and the upper end of the outer sealing portion 24 is adapted to emerge in a substantially upwards and inwards direction to form one of the two sealing lips 25 and is adapted to emerge in a substantially upwards and outwards direction to form the other one of the two sealing lips 25. Other configurations are also encompassed by the present invention.

In an installed configuration, the sealing lip 23 of the inner sealing portion 22 is in contact with the charging socket 30, the two sealing lips 25 of the outer sealing portion 24 are in contact with the body panel 40 and the sealing lip 26 of the outer sealing portion 24 is in contact with the charge flap hinge arm 50. According to other embodiments, the sealing lip 26 of the outer sealing portion 24 may be in contact with the charge flap cover 51.

Figs. 4a and 4b show embodiments of the 2K charge flap housing 21 comprising the sealing unit 20 of Fig. 3 and a secondary sealing unit 27 for sealing a secondary actuator M2. The sealing unit 20 is formed around the inner rim of a primary opening of the 2K charge flap housing 21 and adapted to provide sealing between the 2K charge flap housing 21 and the charge flap hinge arm 50 and subsequently the charge flap cover 51 in a closed configuration. The secondary sealing unit 27 is formed around the inner rim of a secondary opening of the 2K charge flap housing 21 and adapted to provide sealing between the secondary actuator M2 and the 2K charge flap housing 21. The secondary actuator M2 is adapted to lock and unlock the 2K charge flap hinge arm 50 in a closed configuration via a locking part 100 that may be formed as a hook. Further, the secondary actuator M2 may be configured as an electromotive actuator having a micro-switch that may be controlled by the first actuator M1 that actuates the 2K charge flap hinge arm 50. According to an embodiment, the secondary actuator M2 operates with an electrical forward rotation but with a reverse rotation via spring return and a soft touch button (not shown).

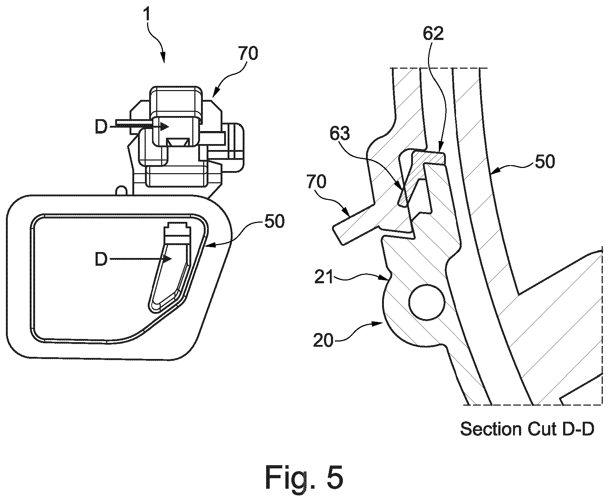

Fig. 5 shows a cross section defined by the section cut D-D of the 2K charge flap arrangement 1 comprising the charge flap hinge arm 50, wherein the 2K charge flap housing 21 of the 2K charge flap arrangement 1 comprises a housing cap 70. Further, it is shown another section of the sealing unit 20 sealing the housing cap 70 with an upper sealing portion 62 and one sealing lip 63. The sealing lip 63 of the upper sealing portion 62 is adapted to provide sealing for example of the IP4k5k type. Other sealing types are also encompassed by this embodiment.

In an assembled configuration of this embodiment, the sealing lip 63 of the upper sealing portion 62 is in contact with an outer surface of the housing cap 70, wherein the upper sealing portion 62 is in contact with a lower surface of the housing cap 70. In addition, the 2K charge flap housing 21 is in contact with an outer and a lower surface of the housing cap 70.

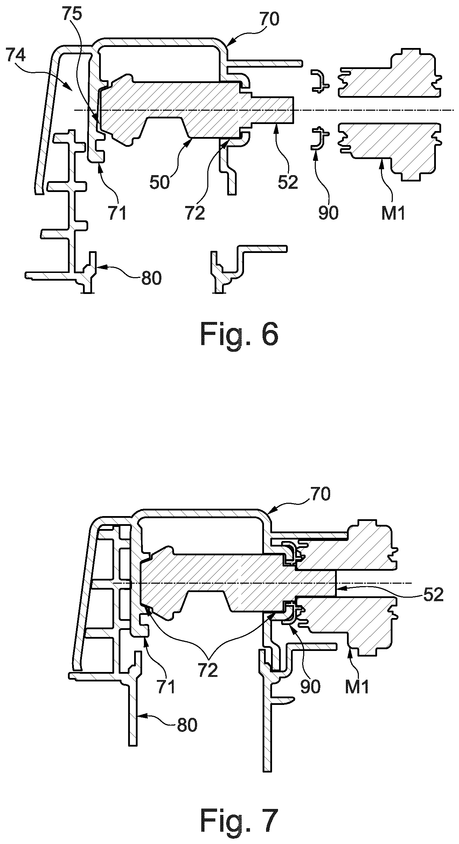

Fig. 6 shows an exemplary cross section of an embodiment of the charge flap hinge arm 50, further comprising a built-in driveshaft 52 in a non-final assembly condition, wherein the charge flap hinge arm 50 has been clipped into the housing cap 70. In this embodiment, the housing cap 70 comprises a flexible hinge arm support 71 and two natural bearing surfaces 72. The two natural bearing surfaces 72 may be formed from any material suitable for supporting the charge flap hinge arm 50 in stability and movement. For example, the housing cap 70 may be made from a polymeric material but is not limited thereto. In the embodiment here, the housing cap 70 and thus the bearing surfaces 72 are made from a self-lubricating polymer. A self-lubricating material is generally preferred. The dashed-dotted line represents the rotational axis of the built-in driveshaft 52 of the charge flap hinge arm 50. The built-in driveshaft 52 of the charge flap hinge arm 50 is supported by only one natural bearing surface 72 and the flexible hinge arm support 71, wherein the flexible hinge arm support 71 providing the second natural bearing surface 72 is bent away from the in-built driveshaft 52 in the non-final assembly condition and thus providing an assembly space 75.

Furthermore, Fig. 6 shows an assembly portion 80 of the charge flap housing 21, that is prepared to be assembled into a respective pocket 74 of the housing cap 70. Further, a sealing component 90 and a primary actuator M1 are shown in a non-assembled condition. According to this embodiment, the primary actuator M1 is provided as an active grille shutter actuator and is adapted to have integrated LIN electronics as well as diagnostics and a follow control, wherein the secondary actuator M2 (shown in Fig. 4b) may be controlled by the status of the primary actuator M1. Both the primary actuator M1 and the secondary actuator M2 are not limited to this specific embodiment and any actuator known in the art to be suitable for this purpose can be used.

Fig. 7 shows the same cross section as Fig. 6, but in a final assembling condition, wherein the flexible hinge arm support 71 providing the second natural bearing surfaces 72 is bent towards the built-in drive shaft 52 by the assembly portion 80 of the charge flap housing 21 in a final position. Further, in the final assembling position, the built-in driveshaft 52 of the charge flap hinge arm 50 is now supported by two natural bearing surfaces 72. The sealing component 90 is pushed onto the housing cap 70 and built-in driveshaft 52 for sealing the first natural bearings 72 and in some embodiments to reduce flutter in the system. The primary actuator M1 is pushed onto the built-in drive shaft 52, after the sealing component 90 is in its final position.

Figs. 6 and 7 furthermore illustrate the steps to be done of the assembly of the charge flap arrangement 1: The charge flap hinge arm 50 comprising the built-in driveshaft 52 is assembled by being rotated, pushed and/or clipped into the housing cap 70. To facilitate the assembly of the charge flap hinge arm 50, the housing cap 70 is moulded with the flexible hinge arm support 71 which is adapted to be flexible in both directions within the elastic limit of its material. While the charge flap hinge arm 50 is clipped into the housing cap 70, the flexible hinge arm support 71 is bent away from the built-in drive shaft 52, in order to provide an assembly space 75. To finalize the assembly of the charge flap arrangement 1, the assembly portion 80 of the charge flap housing 21 is pushed into the pocket 74 of the housing cap 70, causing the flexible hinge arm support 71 to be bent towards the built-in drive shaft 52, thereby rotatably fixating the charge flap hinge arm 50 in the final position in the housing cap 70.

Various features of the disclosure are set forth in the following claims.

### REFERENCE SIGNS

- 1: charge flap arrangement
- 2: engaging feature
- 3: flap releasing button
- 20: sealing unit
- 21: 2K charge flap housing
- 22: inner sealing portion
- 23: sealing lip
- 24: outer sealing portion
- 25: sealing lip
- 26: sealing lip
- 27: secondary sealing unit
- 30: charging socket
- 31: inner panel
- 40: body panel
- 50: 2K charge flap hinge arm
- 51: charge flap cover
- 52: built-in driveshaft
- 62: upper sealing portion
- 63: sealing lip
- 70: housing cap
- 71: flexible hinge arm support
- 72: natural bearing surface
- 74: assembly pocket
- 75: assembly space
- 80: assembly portion of the charge flap housing
- 90: sealing component
- 100: locking part
- X: water flow channel and wind noise area
- M1: primary actuator
- M2: secondary actuator

## Claims

1. A hinge arm assembly for a charge flap arrangement (1) of a motor vehicle, wherein the hinge arm assembly comprises:
a housing cap (70) having at least one flexible hinge arm support (71);
a charge flap housing (21) coupled partially with the flexible hinge arm support (71);
a hinge arm (50) with a built-in drive shaft (52) clipped into the housing cap (70) and hold in place with clamping force;
an actuator (M1) coupled to the built-in drive shaft (52); and
at least one sealing component (90) arranged between the actuator (M1) and the housing cap (70),
**characterized by**
an assembly portion (80) of the charge flap housing (21), that is assembled into a pocket (74) of the housing cap (70), and
an assembly space (75), that is provided when the flexible hinge arm support (71) is bent away from the built-in drive shaft (52),
wherein the housing cap (70) is moulded with the flexible hinge arm support (71), which is flexible in both directions within the elastic limit of its material, such that the assembly portion (80) of the charge flap housing (21) is pushed into the pocket (74) of the housing cap (70), causing the flexible hinge arm support (71) to be bent towards the built-in drive shaft (52), thereby rotatably fixating the charge flap hinge arm (50) in a final position in the housing cap (70).

2. The hinge arm assembly of claim 1, wherein
the housing cap (70) is made from a polymeric material,
wherein preferably the polymeric material is a self-lubricating material.

3. The hinge arm assembly of claim 1 or 2, wherein
the hinge arm material is selected from polymeric materials, glass-filled polymeric materials, metal materials and metal-alloy materials.

4. The hinge arm assembly of any one of the claims 1 to 3, further comprising
a locking mechanism (100) controlled by the electric actuator (M1) comprising at least one micro-switch,
wherein preferably the locking mechanism (100) comprises a hook.

5. A motor vehicle comprising
the hinge arm assembly of any one of the claims 1 to 4.

6. A method for assembling a hinge arm assembly of any one of the claims 1 to 4, for a charge flap arrangement, comprising:
• providing a housing cap (70) having at least one flexible hinge arm support (71);
• rotating, pushing, and/or clipping a hinge arm (50) with built-in drive shaft (52) into the housing cap (71), wherein the at least one flexible hinge arm support (71) provides an assembly space (75) by being molded out of position; and
• pushing the at least one flexible hinge arm support (71) into final assembled condition, by coupling a part of a charge flap housing (21) to the at least one flexible hinge arm support (71).

7. The method of claim 6, further comprising:
attaching an actuator (M1) by pushing the same over the drive shaft (52);
wherein at least one sealing unit or sealing component (90) is arranged between the actuator (M1) and the housing cap (70).

8. The method of claim 6 or 7, wherein
pushing the at least one flexible hinge arm support (71) into final assembled condition is achieved by engaging a part (80) of the charge flap housing (21) into a pocket (74) of the hinge arm assembly,
wherein the part (80) of the charge flap housing (21) and the pocket (74) form an interference fit.

9. The method of any one of the claims 6 to 8, wherein
the housing cap (70) is made from a polymeric material,
wherein preferably the polymeric material is a self-lubricating material.

## Patentansprüche

1. Schwenkarmbaugruppe für eine Ladeklappenanordnung (1) eines Kraftfahrzeugs, wobei die Schwenkarmbaugruppe umfasst:
eine Gehäusekappe (70), die wenigstens einen flexiblen Schwenkarmträger (71) aufweist;
ein Ladeklappengehäuse (21), das teilweise an den flexiblen Schwenkarmträger (71) gekoppelt ist;
einen Schwenkarm (50) mit einer eingebauten Antriebswelle (52), der in die Gehäusekappe (70) eingerastet ist und mit Klemmkraft an Ort und Stelle gehalten wird; einen Aktuator (M1), der an die eingebaute Antriebswelle (52) gekoppelt ist; und
wenigstens eine Dichtungskomponente (90), die zwischen dem Aktuator (M1) und der Gehäusekappe (70) angeordnet ist,
**gekennzeichnet durch**
einen Montageabschnitt (80) des Ladeklappengehäuses (21), der in einer Tasche (74) der Gehäusekappe (70) montiert ist, und
einen Montageraum (75), der bereitgestellt wird, wenn der flexible Schwenkarmträger (71) von der eingebauten Antriebswelle (52) weggebogen wird,
wobei die Gehäusekappe (70) mit dem flexiblen Schwenkarmträger (71) geformt wird, der innerhalb der Elastizitätsgrenze seines Materials in beide Richtungen flexibel ist, sodass der Montageabschnitt (80) des Ladeklappengehäuses (21) in die Tasche (74) der Gehäusekappe (70) geschoben wird, was bewirkt, dass der flexible Schwenkarmträger (71) zu der eingebauten Antriebswelle (52) hin gebogen wird, wodurch der Schwenkarm (50) der Ladeklappe in einer Endposition in der Gehäusekappe (70) drehbefestigt wird.

2. Schwenkarmbaugruppe nach Anspruch 1, wobei
die Gehäusekappe (70) aus einem Polymermaterial hergestellt ist,
wobei das Polymermaterial vorzugsweise ein selbstschmierendes Material ist.

3. Schwenkarmbaugruppe nach Anspruch 1 oder 2, wobei
das Material des Schwenkarms aus Polymermaterialien, mit Glas gefüllten Polymermaterialien, Metallmaterialien und Metalllegierungsmaterialien ausgewählt ist.

4. Schwenkarmbaugruppe nach einem der Ansprüche 1 bis 3, ferner umfassend:
einen Verriegelungsmechanismus (100), der durch den elektrischen Aktuator (M1) gesteuert wird, der wenigstens einen Mikroschalter umfasst,
wobei der Verriegelungsmechanismus (100) vorzugsweise einen Haken umfasst.

5. Kraftfahrzeug, umfassend:
die Schwenkarmbaugruppe nach einem der Ansprüche 1 bis 4.

6. Verfahren zur Montage einer Schwenkarmbaugruppe nach einem der Ansprüche 1 bis 4 für eine Ladeklappenanordnung, umfassend:
• Bereitstellen einer Gehäusekappe (70), die wenigstens einen flexiblen Schwenkarmträger (71) aufweist;
• Drehen, Schieben und/oder Einrasten eines Schwenkarms (50) mit eingebauter Antriebswelle (52) in die Gehäusekappe (71), wobei der wenigstens eine flexible Schwenkarmträger (71) einen Montageraum (75) bereitstellt, indem er außer Position geformt ist; und
• Schieben des wenigstens einen flexiblen Schwenkarmträgers (71) in einen endmontierten Zustand durch Koppeln eines Teils eines Ladeklappengehäuses (21) an den wenigstens einen flexiblen Schwenkarmträger (71).

7. Verfahren nach Anspruch 6, ferner umfassend:
Anbringen eines Aktuators (M1) durch Schieben desselben über die Antriebswelle (52); wobei wenigstens eine Dichtungseinheit oder Dichtungskomponente (90) zwischen dem Aktuator (M1) und der Gehäusekappe (70) angeordnet ist.

8. Verfahren nach Anspruch 6 oder 7, wobei
das Schieben des wenigstens einen flexiblen Schwenkarmträgers (71) in den endmontierten Zustand durch Ineingriffbringen eines Teils (80) des Ladeklappengehäuses (21) mit einer Tasche (74) der Schwenkarmbaugruppe erreicht wird,
wobei der Teil (80) des Ladeklappengehäuses (21) und die Tasche (74) eine Presspassung ausbilden.

9. Verfahren nach einem der Ansprüche 6 bis 8, wobei
die Gehäusekappe (70) aus einem Polymermaterial hergestellt ist,
wobei das Polymermaterial vorzugsweise ein selbstschmierendes Material ist.

## Revendications

1. Assemblage de bras de charnière pour un agencement de volet de charge (1) d'un véhicule à moteur, dans lequel l'assemblage de bras de charnière comprend :
un capuchon de boîtier (70) présentant au moins un support de bras de charnière flexible (71) ;
un boîtier de volet de charge (21) couplé partiellement au support de bras de charnière flexible (71) ;
un bras de charnière (50) avec un arbre d'entraînement intégré (52) clipsé dans le capuchon de boîtier (70) et maintenu en place par une force de serrage ;
un actionneur (M1) couplé à l'arbre d'entraînement intégré (52) ; et
au moins un composant d'étanchéité (90) agencé entre l'actionneur (M1) et le capuchon de boîtier (70),
**caractérisé par**
une portion d'assemblage (80) du boîtier de volet de charge (21), qui est assemblée dans une poche (74) du capuchon de boîtier (70), et
un espace d'assemblage (75), qui est fourni lorsque le support de bras de charnière flexible (71) est replié à distance de l'arbre d'entraînement intégré (52),
dans lequel le capuchon de boîtier (70) est moulé avec le support de bras de charnière flexible (71), lequel est flexible dans les deux directions à l'intérieur de la limite d'élasticité de ce matériau, de telle sorte que la portion d'assemblage (80) du boîtier de volet de charge (21) soit poussée dans la poche (74) du capuchon de boîtier (70), amenant le support de bras de charnière flexible (71) à se replier vers l'arbre d'entraînement intégré (52), fixant ainsi de manière rotative le bras de charnière de volet de charge (50) dans une position finale dans le capuchon de boîtier (70).

2. Assemblage de bras de charnière selon la revendication 1, dans lequel
le capuchon de boîtier (70) est fait à partir d'un matériau polymère,
dans lequel de préférence le matériau polymère est un matériau autolubrifiant.

3. Assemblage de bras de charnière selon la revendication 1 ou 2, dans lequel le matériau de bras de charnière est choisi parmi des matériaux polymères, des matériaux polymères chargés de verre, des matériaux métalliques et des matériaux en alliage métallique.

4. Assemblage de bras de charnière selon l'une quelconque des revendications 1 à 3, comprenant en outre
un mécanisme de verrouillage (100) commandé par l'actionneur électrique (M1) comprenant au moins un micro-rupteur,
dans lequel de préférence le mécanisme de verrouillage (100) comprend un crochet.

5. Véhicule à moteur comprenant
l'assemblage de bras de charnière selon l'une quelconque des revendications 1 à 4.

6. Procédé destiné à assembler un assemblage de bras de charnière selon l'une quelconque des revendications 1 à 4, pour un agencement de volet de charge, comprenant :
• fournir un capuchon de boîtier (70) présentant au moins un support de bras de charnière flexible (71) ;
• tourner, pousser et/ou clipser un bras de charnière (50) avec l'arbre d'entraînement intégré (52) dans le capuchon de boîtier (71), l'au moins un support de bras de charnière flexible (71) fournissant un espace d'assemblage (75) en étant moulé hors de position ; et
• pousser l'au moins un support de bras de charnière flexible (71) dans l'état assemblé final, en couplant une partie d'un boîtier de volet de charge (21) avec l'au moins un support de bras de charnière flexible (71).

7. Procédé selon la revendication 6, comprenant en outre :
attacher un actionneur (M1) en poussant celui-ci sur l'arbre d'entraînement (52) ;
dans lequel au moins une unité d'étanchéité ou un composant d'étanchéité (90) est agencé(e) entre l'actionneur (M1) et le capuchon de boîtier (70).

8. Procédé selon la revendication 6 ou 7, dans lequel
le fait de pousser l'au moins un support de bras de charnière flexible (71) dans l'état assemblé final est réalisé en engageant une partie (80) du boîtier de volet de charge (21) dans une poche (74) de l'assemblage de bras de charnière,
dans lequel la partie (80) du boîtier de volet de charge (21) et la poche (74) forment un ajustement avec serrage.

9. Procédé selon l'une quelconque des revendications 6 à 8, dans lequel
le capuchon de boîtier (70) est fait à partir d'un matériau polymère,
dans lequel de préférence le matériau polymère est un matériau autolubrifiant.
